# EUROPEAN PATENT APPLICATION

(11) **EP 2 556 779 A1**
(43) Date of publication of application: **13.02.2013**
(21) Application number: 11177336.2
(22) Date of filing: 11.08.2011
(51) Int. Cl.: A47J 43/28

(54) **Cooking vessel and utensil**

(71) Applicant: Les Promotions Atlantiques Inc./ Atlantic Promotions Inc., Longueuil QC J4G 1V6 (CA)
(72) Inventor: Bourbeau, Nicolas, Lachine, Québec H8S 3K9 (CA); Nguyen, Thao, St-Bruno-de-Montarville, Québec J3V 3E5 (CA)
(74) Representative: Leszczynski, André

(57) **Abstract**

The present invention relates to a kitchen device, namely a cooking vessel to be used with a cooking utensil. The cooking vessel is adapted to hold the utensil by the stem in order to suspend the cooking implement of the utensil above the container of the cooking vessel. More particularly, the cooking vessel comprises a container having a bottom surface, and a handle extending from the container. The handle has an opening for receiving the stem of the utensil, the opening having a predetermined shape for cooperating with the stem to temporarily hold the stem so that the cooking implement of the utensil hangs above the bottom surface of the container. There is also provided a cooking assembly comprising the cooking vessel and the utensil. There is also provided a handle to be joined to a cooking vessel, as well as a utensil to be used with the cooking vessel.

## Description

### Field of the invention:

The present invention relates to a kitchen device. More particularly, the present invention relates to a cooking vessel, to an associated utensil, to a cooking assembly, as well as to a handle for a cooking vessel.

### Background of the invention:

Known in the art is cooking vessel or baking vessel, such as a cooking pot or pan, for preparing food. Such a cooking vessel is often used with a cooking utensil, for example, to stir the content, to taste the food, or to dispense the food from the cooking vessel. Once the utensil has come into contact with the food, it typically retains some of the food, namely fluids, sauces or the like, which may drip or soil a surface on which it is laid. Thus, a plate or other recipient is usually required to catch the dripping food or avoid dirtying a work surface. The end of the utensil may be laid on plate with the stem of the utensil extending therefrom. At the very least, resting a utensil usually takes up some of the workspace around the cooking area. In some cases, a user will rest the utensil against a side of the cooking vessel to leave the working end of the utensil in the vessel. This may undesirable heat the utensil, prevent from properly covering the pot with a lid, interfere with the cooking process, etc.

Known to the Applicant are United States patents No. 5,924,592 (HIERONYMUS) and 5,678,790 (DWYER), as well as United States patent applications No, 2007/0289981 A1 (SHAW) and 2007/0210094 A1 (KUTSCH) which are directed to various pots or pans, wherein the handle is adapted to support a cooking utensil. However, the pots or pans do not hold the utensil, in that the utensil is not secured in a stable position, it only rests on the handle. Thus, a wrong move may easily throw the utensil out of position. Thus, according to the systems taught by DWYER, SHAW and KUTSCH, a special precaution and care must be taken during cooking to avoid displacing the utensil with respect to the handle of the cooking pot or pan. A similar product is also known to the Applicant and shown at the following website: http://www.wearever.com/WearEver/Cookware/RealEasy/Pages/RealEasy.aspx.

Moreover, the cooking pot of KUTSCH is provided with a pivoting support member located on the handle, which entails a more complex and costly manufacturing of the cooking pot, and which may also be awkward during usage. Similarly, DWYER discloses the need for a number of components additional to a convention pot or pan. Furthermore, in the case of SHAW, teeth project from the utensil to secure it to the handle. These teeth may interfere with the normal usage of the utensil.

HIERONYMUS is directed to a cooking pot assembly adapted to rest a cooking utensil on the handle of the cooking pot and to hold the utensil in place by positioning the lid on the pot. The utensil is configured to fit under the cover. Thus, the cover is required to secure the utensil. Indeed, a skilled reader would understand that upon lifting the cover, the utensil would easily slip into the cooking pot or at the very least be unstable.

Also known to the Applicant is Japanese patent application No. JP2000070162 (A) (SUGIYAMA et al.), as well as international patent application No. WO 97/06719 A1 (MUNARI). However, the teachings of the aforementioned documents also suffer from drawbacks, **as** will be apparent in view of the following explanations.

SUGIYAMA teaches a cooking pan, wherein the handle is provided with an opening located near the base of the handle for the purpose of suspending a spatula above the cooking pan. When the spatula is thus held by the opening, the blade of the spatula is raised with respect to the stem, to provide sufficient space above the container of the pan, for a lid to be placed thereon. The opening being located near the base may be undesirable for a number of reasons, including weakening of the handle, a necessity to redesign the handle and attachment to the container of the pan and increased risk of burning a user when handling the suspended spatula since the holding point is very close to the heated pan and/or food. The proximity of the opening with the base may also lead to added complexity and cost at manufacture, additional cleaning requirements, diminished aesthetic appeal, etc. Moreover, the raised configuration of the spatula when it is held may cause food remaining on the blade to drip towards the handle, which may in turn soil the handle, or even a surrounding surface, cause burns, etc.

MUNARI also teaches a similar cooking pan, wherein the handle is provided with an opening located near the base of the handle, which therefore presents corresponding drawbacks, similarly to SUGIYAMA. Moreover, the opening is formed along a longitudinal axis of the handle which may involve an added complexity for the manufacture of the article, **as** well **as** for cleaning and manipulation of the mechanism.

Hence, In light of the aforementioned, there is a need for an improved system which, by virtue of its design and components, would be able to overcome some of the above-discussed prior art concerns.

### Summary of the invention:

The object of the present invention is to provide a device which, by virtue of its design and components, satisfies some of the above-mentioned needs and is thus an improvement over other related cooking vessels, cooking assemblies and/or related systems known in the prior art.

In accordance with the present invention, the above mentioned object is achieved, as will be easily understood, by a cooking vessel, a cooking utensil and cooking assembly such as the one briefly described herein and such as the one exemplified in the accompanying drawings.

According to an aspect of the present invention, there is provided a cooking vessel to be used with a utensil having a cooking implement and a stem extending from the cooking implement, the cooking vessel comprising: a container having a bottom surface; and an elongated handle extending outwardly from the container, the handle having a free end provided with an opening for hooking the cooking vessel, the opening being sized and shaped for receiving the stem of the utensil, the opening having a predetermined shape for cooperating with the stem to temporarily hold the stem so that the cooking implement hangs above the bottom surface of the container.

The "cooking implement" is an end of the utensil generally used for manipulating food and the "stem" is generally used by a user for maneuvering the implement.

The expression "hangs above the bottom surface" means that the utensil reaches over the edge of the container and the implement of the utensil is positioned either above the container, inside the container or partially inside the container. Preferably, the implement is substantially aligned with the area corresponding to the container, such that matter dropping from the implement will is caught by the container. It is also to be understood that the bottom surface may refer to the lower portion of the container, or depending on the type of cooking vessel or additional devices therein, the bottom surface may be elevated with respect to the lower portion, for example, in the case of a steamer pot having a second container or plate provided within the main cooking container Preferably, the implement is suspended off a surface of the container and out of contact from the food or any other component or device placed within the container of the cooking vessel.

According to another aspect of the present invention, there is provided a cooking assembly comprising the above-mentioned cooking vessel in combination with the above-mentioned utensil, the stem of the utensil being shaped to cooperate with the predetermined shape of said opening of the elongated handle.

According to another aspect of the present invention, there is provided an elongated handle for a cooking vessel comprising: a bottom surface, to be used with a utensil having a cooking implement and a stem extending from the cooking implement, the elongated handle comprising a base having a mounting component for mounting the handle on the cooking vessel to extend outwardly therefrom; and a free end provided with an opening for hooking the cooking vessel, the opening being sized and shaped for receiving the stem of the utensil, the opening having a predetermined shape for cooperating with the stem to temporarily hold the stem so that the cooking implement hangs above the bottom surface of the container when the elongated handle is mounted on the cooking vessel.

According to yet another aspect of the present invention, there is provided a cooking vessel to be used with a utensil having a cooking implement and a stem extending from the cooking implement, the stem having a recessed portion comprising a locking edge, the cooking vessel comprising: a container having a bottom surface; and a handle extending from the container, the handle having a support surface for supporting the stem and an opening for receiving the stem of the utensil, the opening having a stopper edge that is shaped to match with said locking edge of the stem for hooking the stem against the opening to temporarily hold the utensil so that the cooking implement hangs above the bottom surface of the container.

According to another aspect of the present invention, there is provided a cooking assembly comprising the above-mentioned cooking vessel in combination with the above-mentioned utensil.

According to yet another aspect of the present invention, there is provided a handle for a cooking vessel comprising a bottom surface, to be used with a utensil having a cooking implement and a stem extending from the cooking implement, the stem having a recessed portion comprising a locking edge, the handle comprising: a base having a mounting component for mounting the handle on the cooking vessel; a support surface for supporting the stem; and an opening for receiving the stem of the utensil, the opening having a stopper edge that is shaped to match with said locking edge of the stem for hooking the stem against the opening to temporarily hold the utensil so that the cooking implement hangs above the bottom surface of the container when the handle is mounted on the cooking vessel.

According to yet another aspect of the present invention, there is provided a utensil to be used with a cooking vessel comprising a container having a bottom surface and a handle extending from the container, the handle having an opening which comprises a stopper edge, the utensil comprising: a cooking implement; and a stem extending from the cooking implement, the stem being shaped and sized to fit into the opening of the handle of the cooking vessel, the stem having a recessed portion comprising a locking edge that is shaped and positioned to match said stopper edge of the opening for positioning the stem with respect to the handle to temporarily hold the utensil at the opening so that the cooking implement hangs above the bottom surface of the container.

The objects, advantages and features of the present invention will become more apparent upon reading of the following non-restrictive description of preferred embodiments thereof, given for the purpose of exemplification only, with reference to the accompanying drawings.

### Brief description of the drawings:

FIG. 1 is a perspective view of a cooking assembly according to a preferred embodiment of the present invention, including a cooking vessel and a utensil supported on the cooking vessel.
FIG. 2 is a top view of the cooking assembly shown in FIG. 1.
FIG. 3 is a cross-sectional side view of the cooking assembly shown in FIG. 2, taken along line III-III.
FIG. 4 is an exploded view of the cooking assembly shown in FI G. 1.
FIG. 5 is a top view of the cooking vessel shown in FIG. 1.
FIG. 6 is a bottom view of the cooking vessel shown In FIG. 5.
FIG.7 is a front view of the cooking vessel shown in FIG. 5.
FIG. 8 is a rear view of the cooking vessel shown in FIG. 5.
FIG. 9 is a bottom perspective view of the utensil shown in FIG. 1.
FIG. 10 is a side view of the utensil shown in FIG. 9.
FIG. 11 is a front view of the utensil shown in FIG. 9.
FIG. 12 is a rear view of the utensil shown in FIG. 9.
FIG. 13 is a top view of the utensil shown in FIG. 9.
FIG. 14 is a bottom view of the utensil shown in FIG. 9.
FIG. 15 is a perspective view of a cooking vessel according to another embodiment of the present invention.
FIG. 16 is a perspective view of a cooking vessel according to another embodiment of the present invention.
FIG. 17 is a perspective view of a utensil according to another embodiment of the present invention.
FIG. 18 is a perspective view of a utensil according to another embodiment of the present invention.
FIG. 19 is a perspective view of a utensil according to yet another embodiment of the present invention.
FIG. 20 is a perspective view of a utensil according to yet another embodiment of the present invention.
FIG. 21 is a perspective view of a utensil according to yet another embodiment of the present invention.
FIG. 22 is a perspective view of a utensil according to yet another embodiment of the present invention.
FIG. 23 is a perspective view of a utensil according to yet another embodiment of the present invention.

### Detailed description of preferred embodiments of the invention:

In the following description, the same numerical references refer to similar elements. The embodiments, geometrical configurations, materials mentioned and/or dimensions shown in the figures or described in the present description are preferred embodiments only, given for exemplification purposes only.

In the context of the present invention, the expressions "cooking vessel", "pot", "pan", and any other equivalent expression and/or compound words thereof known in the art will be used interchangeably. Furthermore, the same applies for any other mutually equivalent expressions, such as "lower peripheral portion" and "first contact surface", as well as "upper peripheral portion" and "second contact surface", for example, **as** also apparent to a person skilled in the art.

Moreover, although the preferred embodiment of the present invention **as** illustrated in the accompanying drawings comprises components such as an upper peripheral surface, a lower peripheral portion, a recess, a recessed portion, a locking edge, a stopper edge, etc, and although the preferred embodiment of the cooking vessel, the handle, the utensil, the cooking assembly and corresponding parts thereof consists of certain geometrical configurations as explained and illustrated herein, not all of these components and geometries are essential to the invention and thus should not be taken in their restrictive sense, i,e. should not be taken as to limit the scope of the present invention. It is to be understood, as also apparent to a person skilled in the art, that other suitable components and cooperations thereinbetween, as well as other suitable geometrical configurations may be used for the cooking vessel according to the present invention, as will be briefly explained herein and as can be easily inferred herefrom, by **a** person skilled in the art, without departing from the scope of the invention.

Broadly described, the cooking vessel according to the present invention, **as** exemplified in the accompanying drawings, is a cooking vessel to be used with a utensil having a cooking implement and a stem extending from the cooking implement. The cooking vessel is adapted to temporarily hold the utensil by the stem in order to suspend the cooking implement above the container of the cooking vessel.

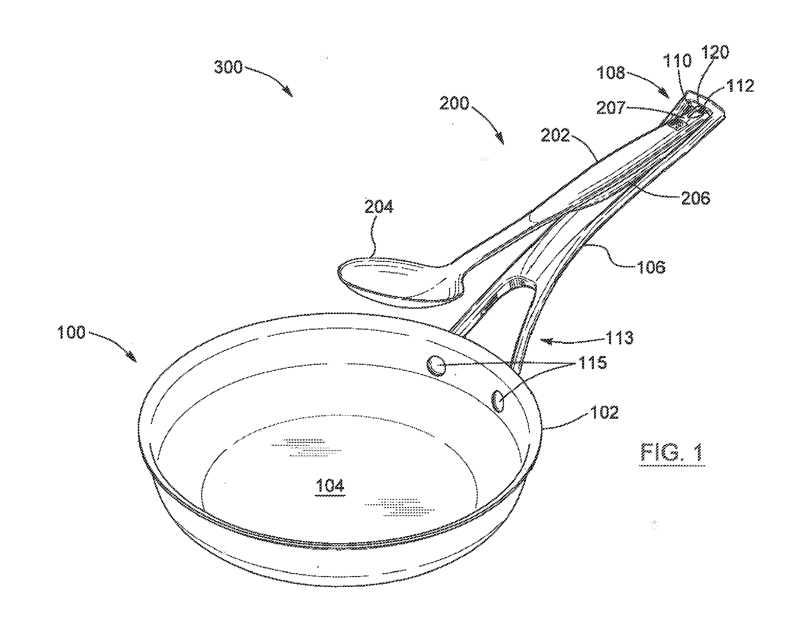

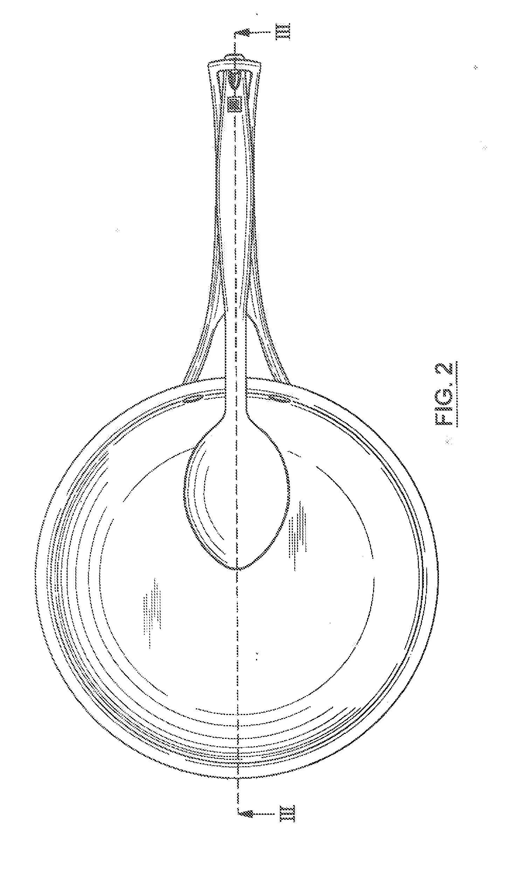

Referring to FIG. 1 to 4, there is shown a cooking vessel **100**, namely a pan, with a utensil **200**, namely a spoon. The cooking vessel **100** comprises a container **102** having a bottom surface **104**, and an elongated handle **106** extending outwardly from the container **102**. The handle **106** has a free end **108** provided with an opening **110** for hooking the cooking vessel **100**. The opening **110** is sized and shaped for receiving the stem **202** of the utensil **200**. The opening **110** has a predetermined shape for cooperating with the stem **202** to temporarily hold the stem **202** so that the cooking implement **204** hangs above the bottom surface **104** of the container **102**. Indeed, the opening **110** which is normally used for hooking the cooking vessel during storage is shaped, sized and configured to hold the utensil **200**, when using the cooking vessel.

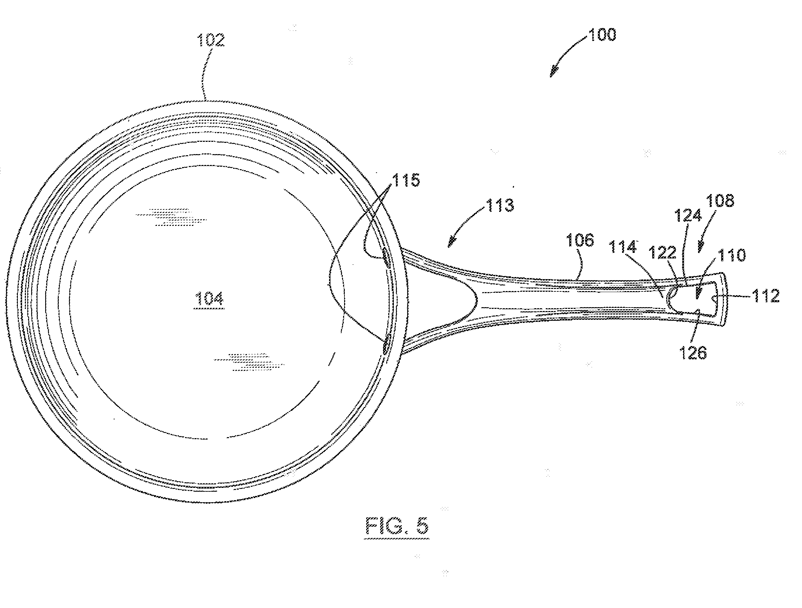

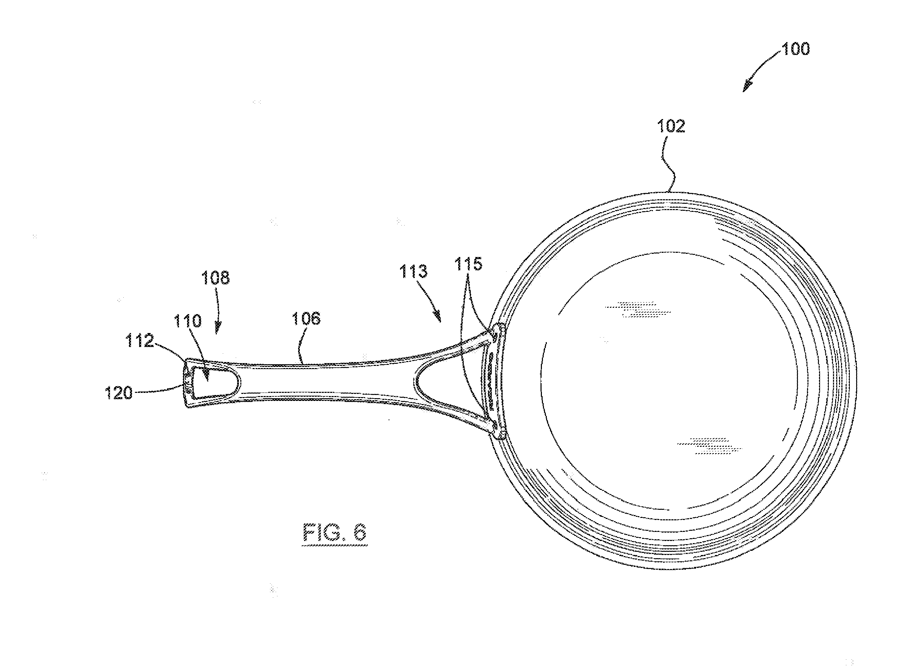

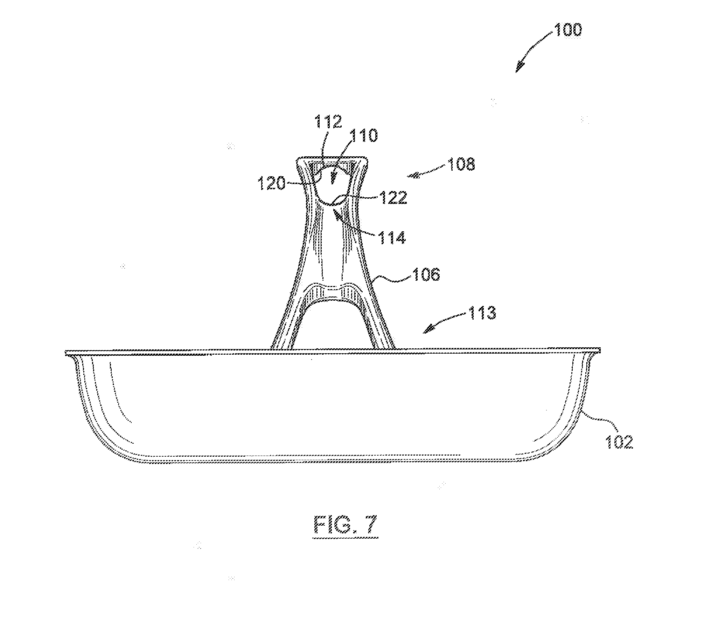

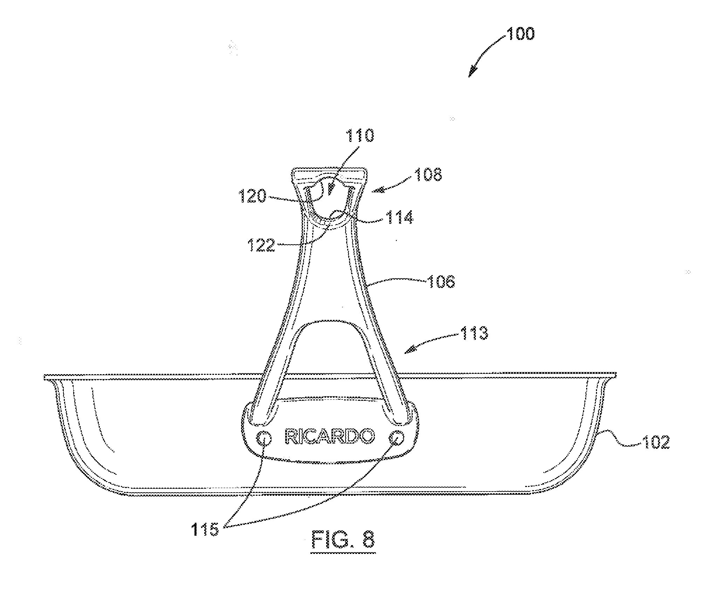

As can be seen in the drawings, with further reference to FIG. 5 to 8, the predetermined shape of the opening **110** is characterized by an upper peripheral portion **112** and a lower peripheral portion **114**. The lower peripheral portion **114** is located between the upper peripheral portion **112** and the container **102**. The upper **112** and lower **114** peripheral portions of the opening **110** cooperate with the stem **202** to temporarily hold said stem **202** between the upper **112** and lower **114** peripheral portions. Indeed, as can be seen in FIG. 1, a lower portion **206** of the stem **202** of the utensil **200** rests on the lower peripheral portion **114**. The stem **202** is further counterbalanced, via **a** downward force and/or frictional engagement, by the upper peripheral portion **112**, which is in contact with an upper portion **207** of the stem to prevent the stem from slipping down along the handle **106**, as well as to secure the stem **202** in position. Indeed, the lower peripheral portion **114** provides a first contact surface and the upper peripheral portion **112** provides a second contact surface, the first **114** and second **112** contact surfaces each exert a force on the stem **202**, in substantially opposing directions, so as to hold the stem **202** thereinbetween, in a stable position.

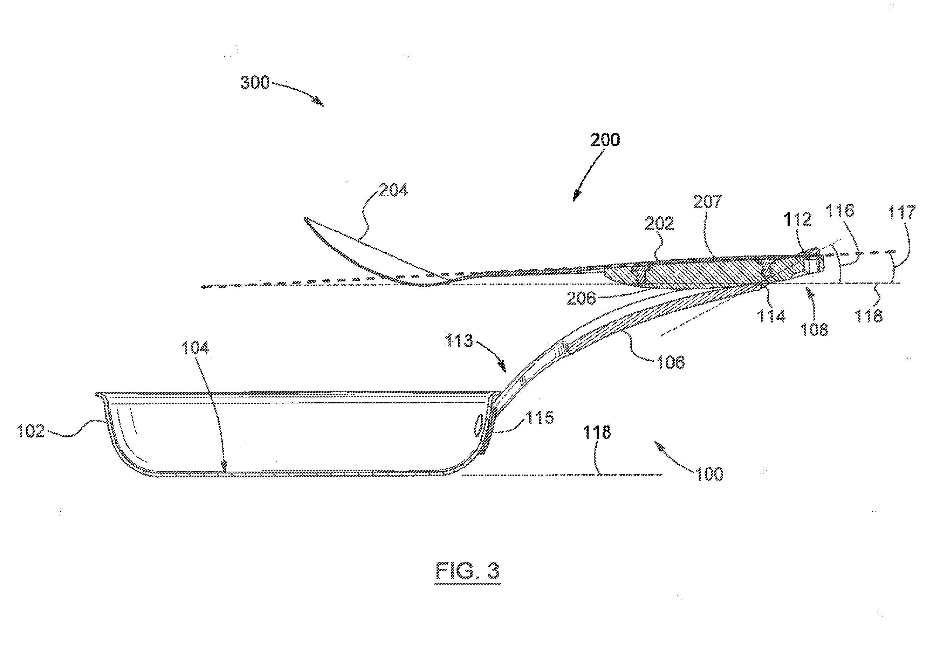

As can also be seen, the elongated handle **106** extends upwardly from the container **102**. The base **113** of the handle is V-shaped and attached to the container by way of fasteners **115**. Moreover, the upper peripheral portion **112** is positioned with respect to the lower peripheral portion **114** so that, when the utensil **200** is temporality hold, the implement **204** of the utensil **200** is biased downwardly toward the bottom surface **104** of the cooking vessel **100**. More particularly, the stem **202** is inclined downwardly toward the container **102**. It is to be understood that the implement of the utensil may be oriented in any suitable direction. For example, in the embodiment shown in FIG. 3, though the implement **204** is positioned upwardly, food matter present on the implement **204** will tend to collect near the connection between the implement **204** and the stem **202** and then drop into the container **102.**

Thus, with reference to FIG. **3**, the upper peripheral portion **112** and the lower peripheral portion **114** form an inclination angle 116 with the plane **118** of the bottom surface **104**, of about 30 degrees. By "plane **118** of the bottom surface", it is meant any plane which is generally parallel with the bottom surface **104** of the cooking vessel when it is positioned for cooking and containing food in the container. In other words, the plane **118** refers to a substantially horizontal plane. The inclination angle **116** is preferably less than 90 degrees. Still preferably, the inclination angle **116** is between 15 and 60 degrees.

According to the embodiment shown in FIG. **3**, the angle **117** which the stem **202** of the utensil forms with the plane **118**, is of about 2.5 degrees. It is to be understood that the inclination **117** of the utensil resulting from the above-mentioned inclination angle **116**, may vary depending on the shape and size of the stem of the utensil, since a lower portion **206** of the utensil rests on the lower peripheral portion and an upper portion **207** of the stem **202** of the utensil **200**. Thus, the utensil **200** is preferably configured to cooperate with the opening and with the elongated handle **106**, in order to obtain the desired inclination of the utensil **200**. Preferably, the angle **117** is less than 65 degrees. Still preferably, the angle **117** is 30 degrees or less, or even 10 degrees or less, in order to impart more stability to the utensil **200** when it is held by the cooking vessel **100**.

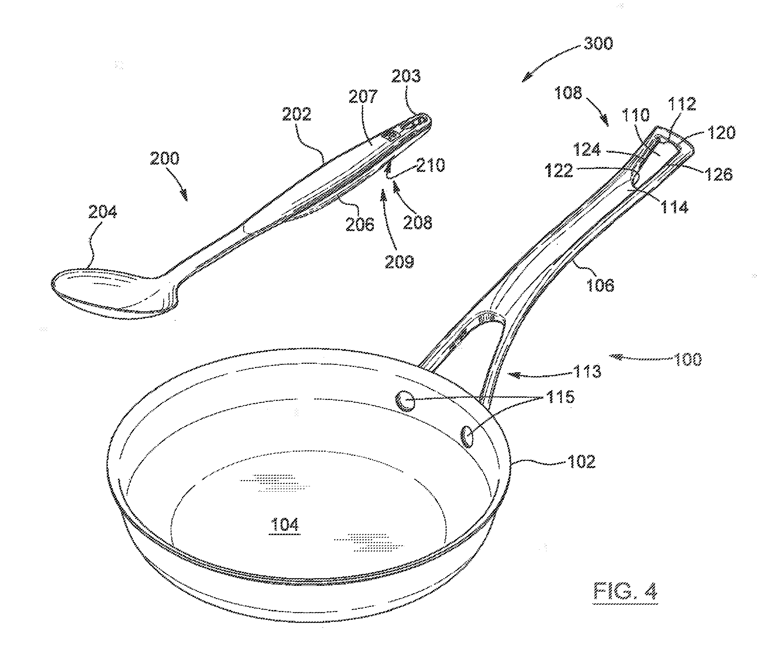

With reference to FIG. 1 and 4, the upper peripheral portion **112** comprises **a recess 120** capable of cooperating with the stem **202**. Namely, the recess **120** is shaped to fittingly nest therein a corresponding portion **203** of the stem **202**. Indeed, as apparent in FIG. 4, the recess **120** is curved for mating with the stem **202** of the utensil **200**, which is rounded at the corresponding portion **203**.

According to an alternative embodiment, there is no such recess. For example, if the stem extends fittingly between side edges (corresponding to **124, 126** in FIG. **4**) of the opening and/or if the stem is substantially flat in the area of contact with the upper peripheral surface, there may be no need for such a recess. Moreover, it is to be understood that a recess may be provided on the utensil, alternatively or additionally to the recess on the upper peripheral surface, in order to engage the upper peripheral surface, **as** can be understood by **a** person skilled in the art.

Referring back to FIG. 1 and 4, the lower peripheral portion **114 extends** along the elongated handle **106** of the cooking vessel 200, for supporting a corresponding contact portion **209** of the stem **202** of the utensil **200**. Moreover, the lower peripheral portion **112** is curved for mating with the stem **202**, having a complementarily rounded portion **209**. This configuration further secures the stem **202** with respect to the handle **106**.

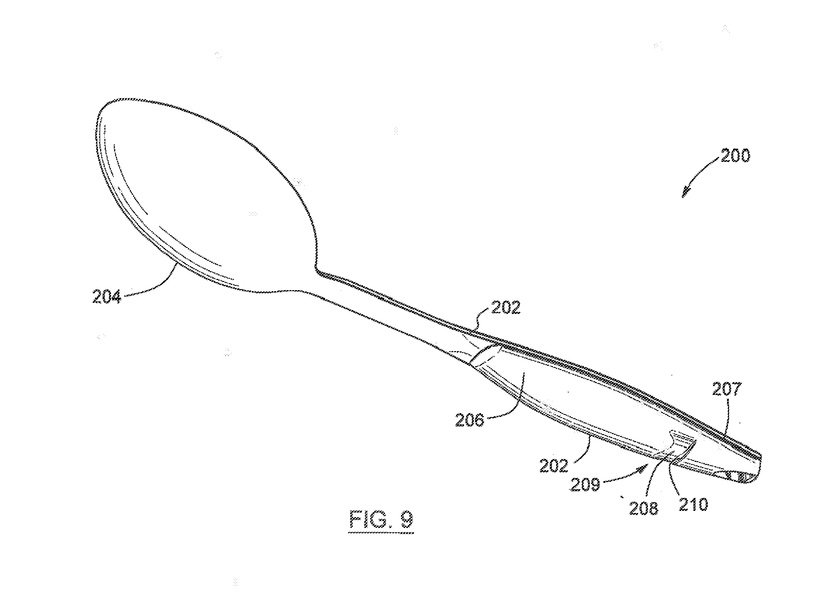

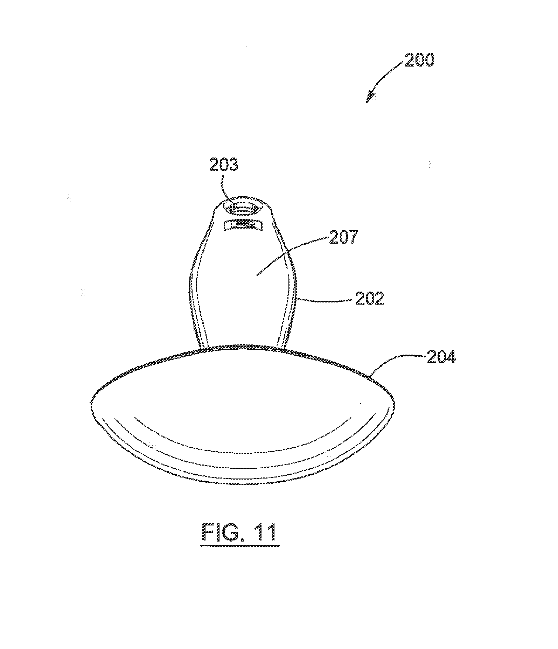

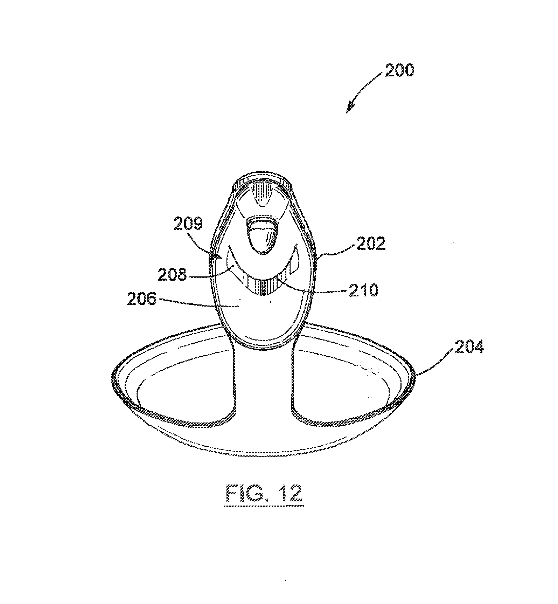

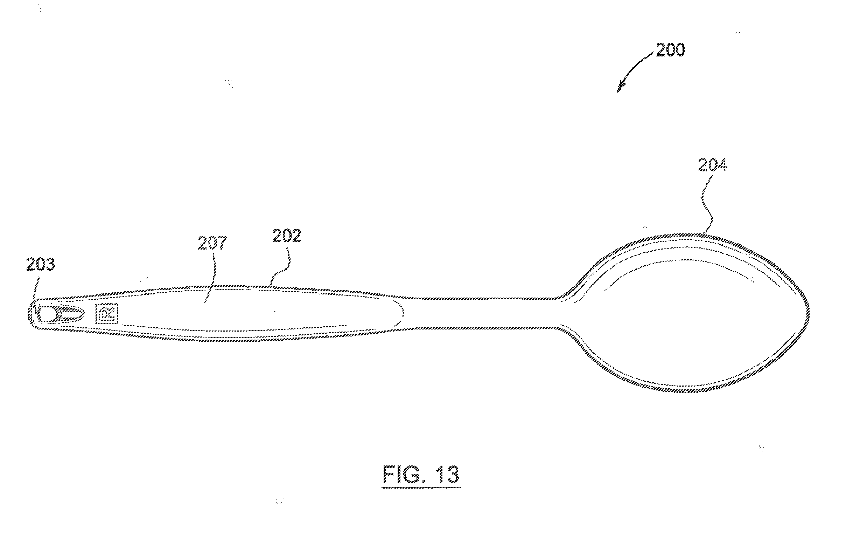

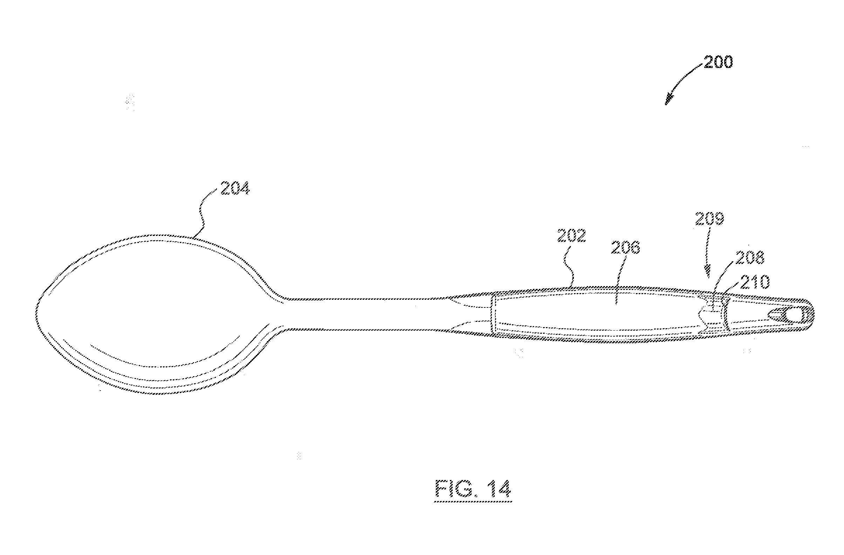

With reference to FIG. 1 to 4, the cooking **vessel 100** and utensil **200** form a cooking assembly **300**. The utensil 200 will now be better described with further reference to FIG. 9 to 14. As previously mentioned, the stem **202** of the utensil **200** is shaped to cooperate with the predetermined shape of the opening **110** of the elongated handle **106** of the cooking vessel **100**. More particularly, the stem **202** has a lower portion **206**, which comprises a **recessed** portion **208** (better shown in FIG. 9, 10 and 12), located in the above-mentioned contact portion **209**, to mate with the lower peripheral portion **114** of the opening **110** of the elongated handle **106**.

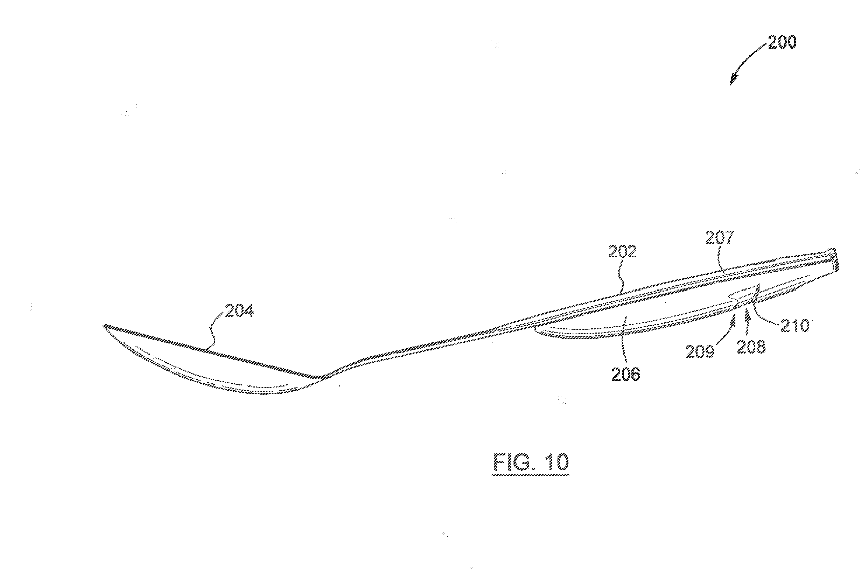

The lower peripheral portion **114** of the opening **110** comprises a stopper edge **122** and the recessed portion **208** of the utensil **200** comprises a locking edge **210** (better shown in FIG. 9 and 10), that is shaped and positioned to match with the stopper edge **122** in order to hook the stem **202** against the lower peripheral portion **114** of the opening **110** of the handle **106** of the cooking vessel **100**. Indeed, the locking edge **210** of the utensil **200** rests against the stopper edge **122** of the handle **106** of the cooking vessel **100**. Preferably, the locking edge **210** of the utensil **200** and stopper edge **122** of the opening **110** have complementary curved profiles, in order to position the utensil with respect to the handle.

The above described stopper edge **122**, curved lower peripheral portion **114** which extends along the handle **106** and recess **120** of the upper peripheral portion **112**, as well as the recessed portion **208** of the utensil, further provide tactile references which allow a user to naturally position the stem of the handle in a stable supported position with respect to the opening **110**, as well as to align the cooking implement **204** of the utensil **200** with respect to the container **102** of the cooking vessel **100**.

Thus, the present invention is particularly useful in that it allows resting a utensil on a cooking vessel, without having to resort to another receptacle for resting the utensil or placing the utensil in the container of the vessel. Moreover, by resting the utensil on the cooking vessel, with the implement being suspended above the container, residual food matter which drips from the utensil falls into the container of the cooking vessel, in order to avoid soiling a surrounding surface. Furthermore, the positioning of the holding means (i.e. the opening) at the free end of the handle reduces the risk of burns or the like when placing or removing the utensil with respect to the cooking vessel, as the connection between the utensil and the cooking vessel is spaced away from the container of the cooking vessel.

Moreover, according to the illustrated embodiments, the present invention is achieved with subtle modifications to a standard cooking vessel and cooking utensil, and thus generally maintains the known designs of such cooking vessels and utensil. Indeed, they do not require additional components which may interfere with the normal usage or aesthetic of such cooking vessels and utensils. The skilled reader will understand that according to embodiments of the present invention, the cooking vessel may be shaped to accommodate a variety of standard utensils or the like. The embodiments illustrated herein are also easily adaptable to a wide variety of shapes of vessels and of utensils, as is readily apparent to the skilled person.

Moreover, the present invention is advantageous in that the above-described cooking vessel combines the opening normally used for hooking the cooking vessel with a holding means, and is thus simple in design and manufacture, as well as for operating. Indeed, the stem of the utensil may be easily introduced and secured into the opening of the handle, without the need to balance the stem into a stable position. Moreover, it is very easily adapted to a conventional cooking vessel design, as previously mentioned. Embodiments of the present invention are also advantageous in that the stem is inclined downwardly to prevent matter which is present on the implement of the utensil from dripping along the stem. Embodiments of the present invention are also advantageous in that the implement is positioned, when the utensil is held by the handle of the cooking vessel, so as to reduce interference with other cooking activities. Indeed, if the implement and/or stem points upwardly, it may be obstructive to movements of the user, etc.

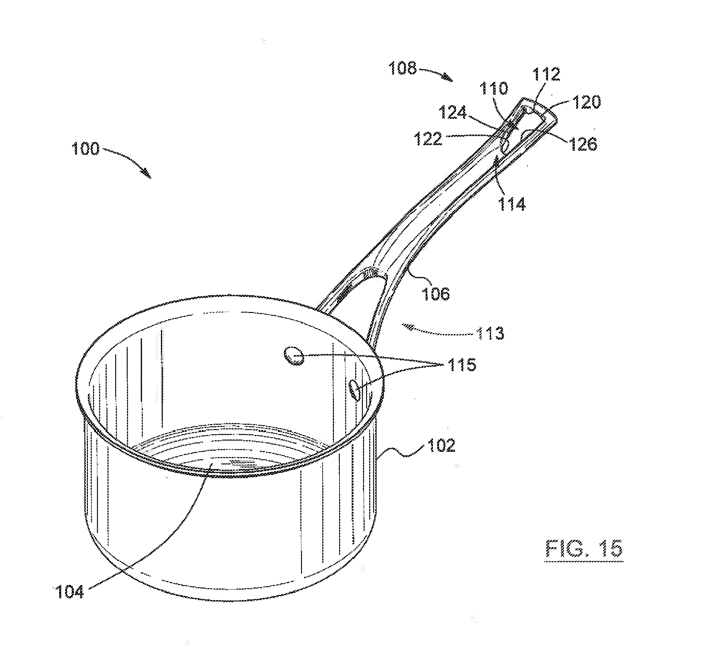

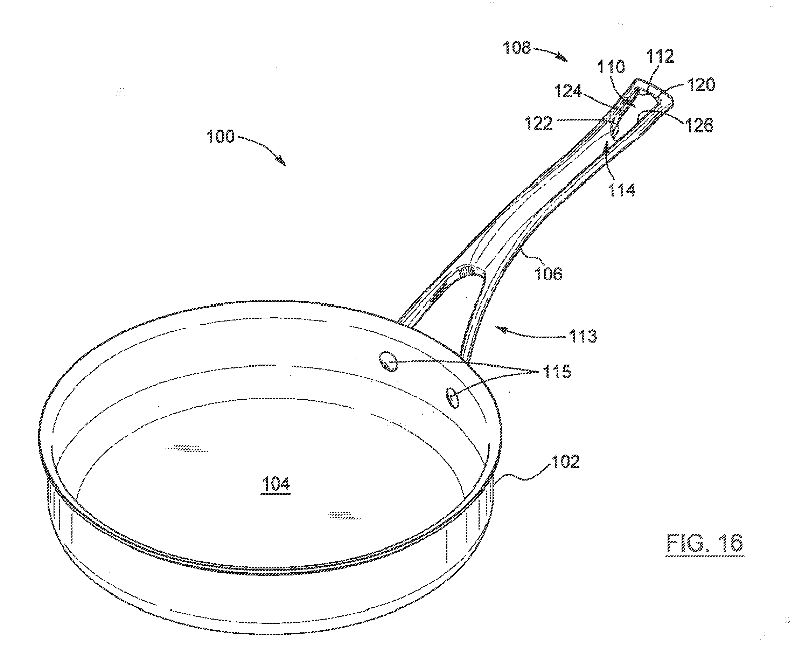

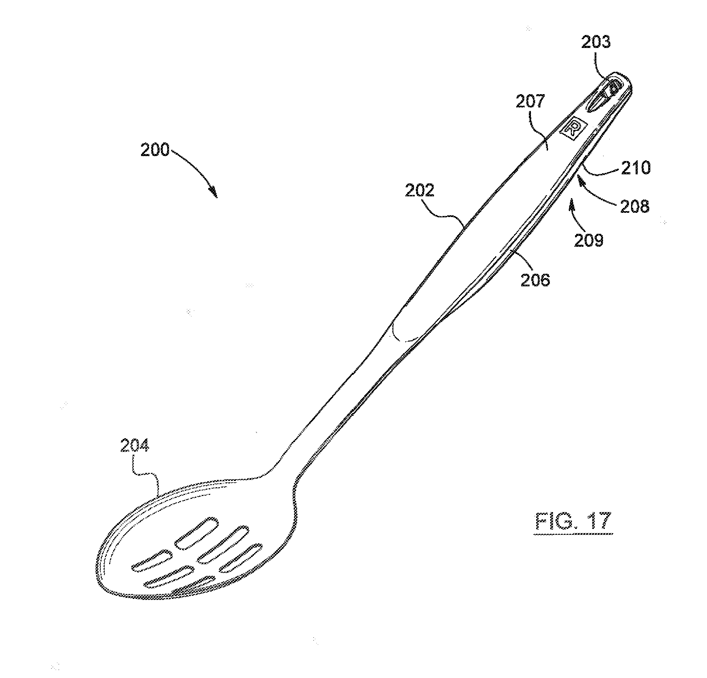

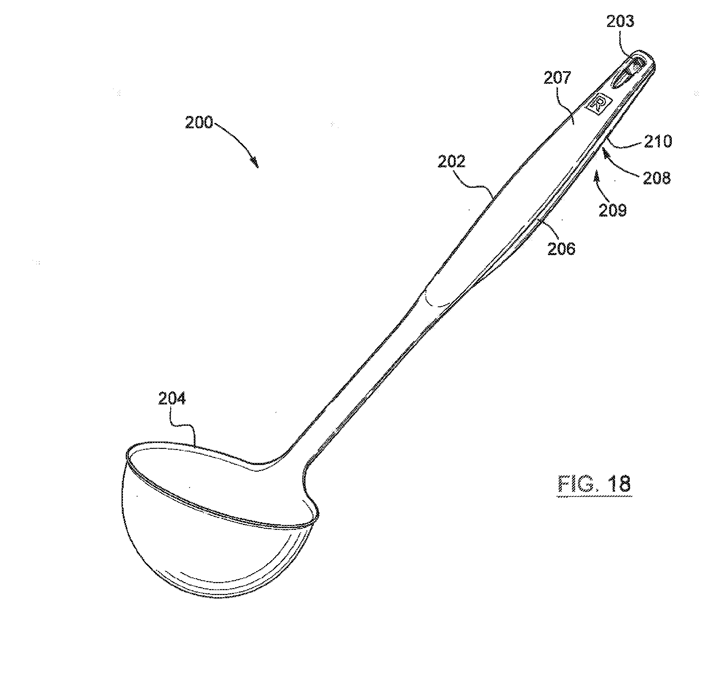

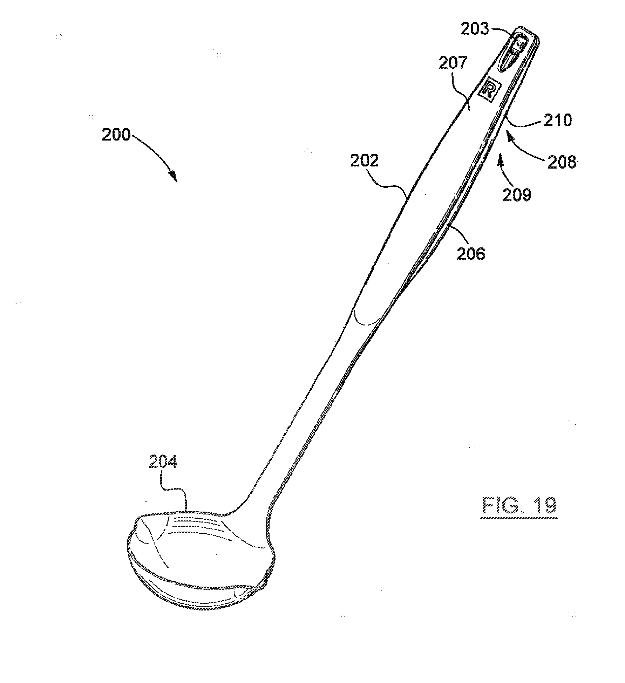

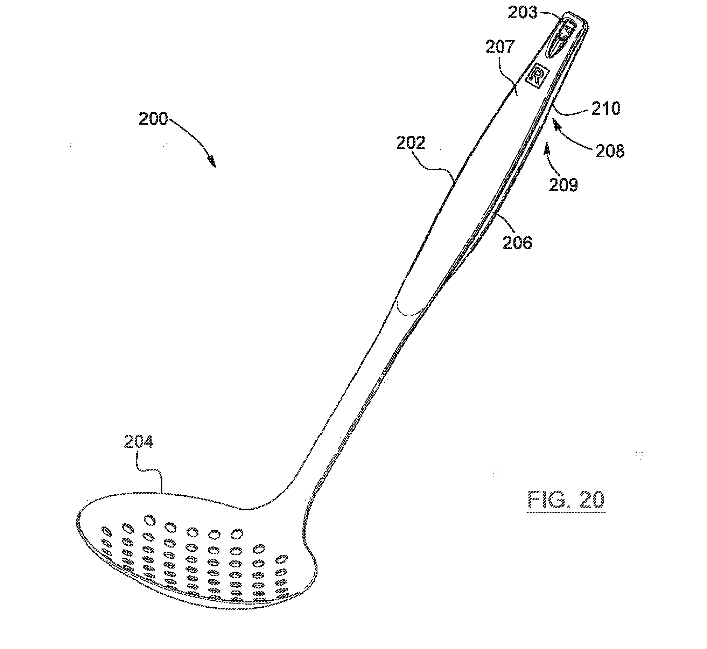

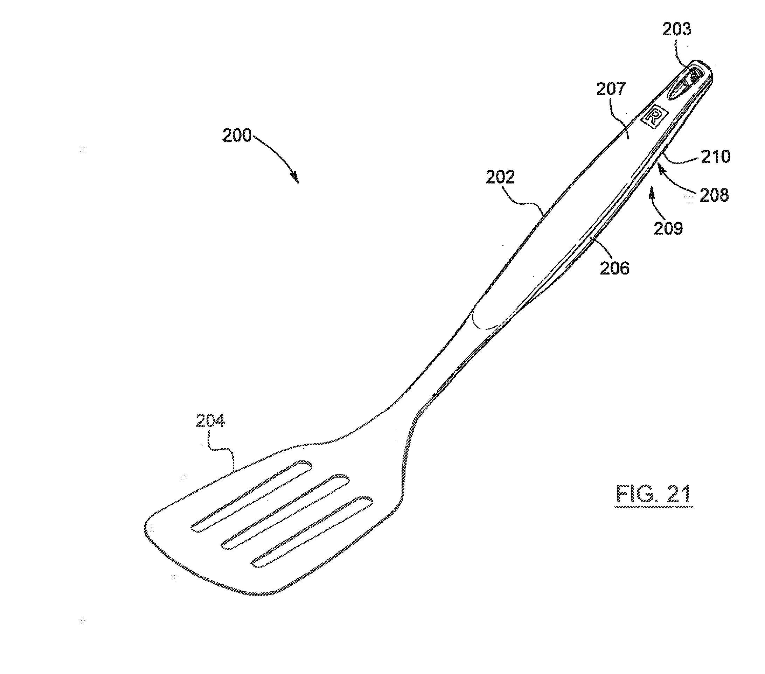

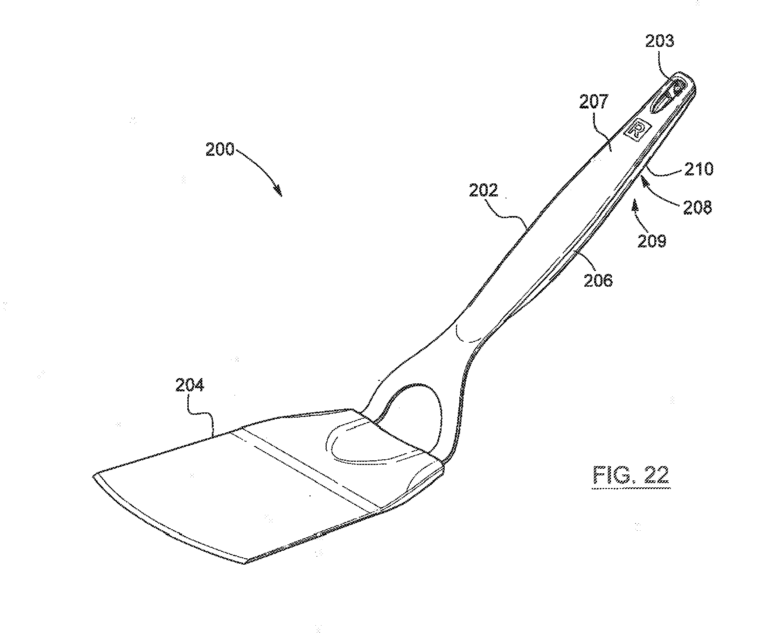

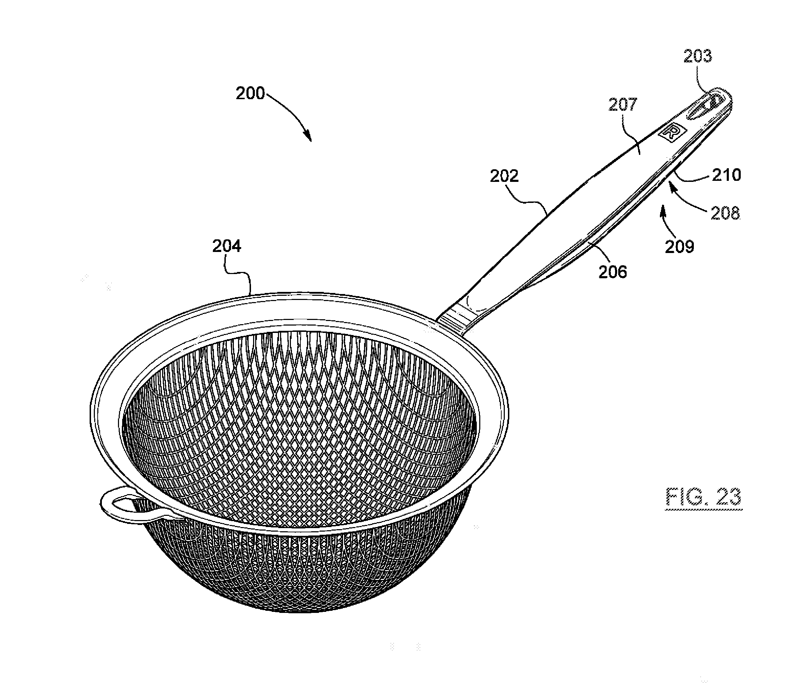

The above-mentioned cooking vessel and utensil may be provided in a variety of embodiments as previously mentioned. For example, the cooking vessel may have any suitable shape of container, as exemplified in FIG. 15 and 16. Moreover, examples of different utensils 200 are illustrated in FIG. 17 to 23, according to embodiments of the present invention.

It is to be understood that depending on the particular configuration of the cooking vessel, as well as on the shape, length and size of the utensil, the cooking implement may hang above the container or inside the container of the cooking vessel (i.e. below an upper rim of the container), when the utensil is held by the opening on the handle of the cooking vessel.

Several modifications could be made to the above-described cooking vessel, handle, utensil or cooking assembly, without departing from the scope of the present invention, as can be easily understood by a person skilled in the art. Indeed and for example, the opening may be shaped to frictionally engage the stem of the utensil along the peripheral surface defining the opening or along one or more portion of the peripheral surface. The opening may be provided with a flexible biased material surrounding the opening, i.e. a cushion, wherein the stem of the utensil may be squeezed into and held in place. Moreover, the opening of the handle and/or stem of the utensil may comprise an anti-skid surface and/or the like, in order to enhance friction between the stem and the opening. Still according to an embodiment, the utensil may be secured to the handle of the cooking vessel only by means of the locking edge in conjunction with the stopper edge of the lower peripheral portion, or another similar hooking mechanism. As previously mentioned, the utensil may be provided with a recess on an upper portion of the stem, according to an alternative embodiment, to engage the upper peripheral portion of the opening. Still alternatively, the utensil may have a hook-shaped free end to be fitted through the opening and looped about the free end of the handle of the cooking vessel to be hooked thereto. Alternatively or additionally, the hook-shaped free end is configured to hook onto the lower peripheral portion of the opening.

In the context of the present description, the term lower peripheral portion generally refers to a surface provided near or along the opening, on a side of the opening which is proximal with respect to the container of the cooking vessel. Still in the context of the present description, the term upper peripheral portion generally refers to a surface provided near or along the opening, on a side of the opening which is distal with respect to the container of the cooking vessel. The lower or upper peripheral portions may be provided at any suitable angle. The upper peripheral portion may be substantially vertical, for example, to hold a corresponding surface of the stem by friction.

Also, it is to be understood that the opening, according to alternative embodiments, may be configured to place the stem or utensil horizontally or even to incline the stem or utensil upwardly. Still alternatively, the opening is configured to allow the utensil to be oriented according to different angles. Moreover, the handle may be provided in any suitable shape, size, configuration and/or orientation. Moreover, even if the handle is not inclined downwardly, it may be provided with suitably located first and second contact surfaces to incline the utensil as desired, i.e. upward or downward. Also the first and/or second contact surface may be spaced away from the opening. Moreover, it is to be understood also that the stem does not necessary extend all the way through the opening to be held therein, according to some embodiments of the present invention.

Several other modifications could be made to the above-described cooking vessel, handle, utensil or cooking assembly, without departing from the scope of the present invention, as can be easily understood by a person skilled in the art. Indeed and for example, the opening may be configured to allow positioning the utensil according to different options. For example, the upper peripheral portion may be provided with a plurality of laterally offset recesses to allow positioning the stem along different angles with respect to the longitudinal axis of the handle. Still alternatively, the lower peripheral surface is provided with a recess or recesses for accommodating the profile of the stem.

It is to be understood also, that the utensil may be configured according to any suitable shape for cooperating with the opening of the cooking vessel to be temporarily held and to align the implement with an area corresponding to the container of the cooking vessel. According to alternative embodiments, the implement of the utensil is not aligned with the area corresponding to the container, which may be suitable when the implement does not have any matter thereon which is likely to drip and/or to allow full access to the container of the cooking vessel. According to alternative embodiments, the utensil is configured to be held by the opening at different points along the stem. For example, the stem may be provided with a series of recessed portions along the stem with corresponding locking edges, such as the one described above, which are each compatible with the opening of the handle of the cooking vessel, to allow a user to position the utensil at various lengths, positions, etc., for example, in order to be compatible with different sizes of cooking vessels, etc. Still alternatively and as previously mentioned, a recessed portion is provided on an upper portion of the stem to cooperate with the upper peripheral portion of the opening. Still alternatively, the stem is configured to be positioned at a particular angle with respect to the handle, for example with one or more recesses or protrusions which are positioned to cooperate with the upper and lower peripheral portions of the opening of the handle. Thus the angle of the stem when held by the handle of the cooking vessel may vary depending on the particular utensil.

According to an alternative embodiment, the handle of the cooking vessel and the stem of the corresponding utensil to be supported on the cooking vessel may have an identical or very similar shape in order to reduce manufacture costs and effort.

Numerous other modifications could be made to the above-described cooking vessel, handle, utensil and cooking assembly, without departing from the scope of the present invention. The above-described embodiments are considered in all respect only as illustrative and not restrictive, and the present application is intended to cover any adaptations or variations thereof, as apparent to a person skilled in the art.

Moreover, although the present invention provides a cooking vessel for cooking food, embodiments of the present invention may also be adapted for a baking dish, a plate and/or the like, as can also be easily understood by a person skilled in the art, without departing from the scope of the present invention. Moreover, the present invention may also be adapted for other receptacles which are used with a tool for dispensing the content of the recipient, such as for example a can of paint with a paintbrush, etc.

The above-described embodiments are considered in all respect only as illustrative and not restrictive, and the present application is intended to cover any adaptations or variations thereof, as apparent to a person skilled in the art. Of course, numerous other modifications could be made to the sbove-described embodiments without departing from the scope of the invention, as apparent to a person skilled in the art.

## Claims

1. A cooking vessel to be used with a utensil having a cooking implement and a stem extending from the cooking implement, the cooking vessel comprising
- a container having a bottom surface; and
- an elongated handle extending outwardly from the container, the handle having a free end provided with an opening for hooking the cooking vessel, the opening being sized and shaped for receiving the stem of the utensil, the opening having a predetermined shape for cooperating with the stem to temporarily hold the stem so that the cooking implement hangs above the bottom surface of the container.

2. A cooking vessel according to claim 1, wherein the predetermined shape of the opening is **characterized by** an upper peripheral portion and a lower peripheral portion located between the upper peripheral portion and the container, the upper and lower peripheral portions of the opening cooperating with the stem to temporarily hold said stem between said upper and lower peripheral portions.

3. A cooking vessel according to claim 2, wherein the elongated handle extends upwardly.

4. A cooking vessel according to claim 3, wherein the upper peripheral portion is positioned with respect to the lower peripheral portion so that, when said utensil is temporality held, the implement of said utensil is biased downwardly toward said bottom surface.

5. A cooking vessel according to claim 4, wherein the upper peripheral portion and the lower peripheral portion form an inclination angle with the plane of the bottom surface, wherein the inclination angle is between 15 and 60 degrees.

6. A cooking vessel according to any one of claims 2 to 5, wherein the upper peripheral portion comprises a recess capable of cooperating with the stem.

7. A cooking vessel according to claim 6, wherein the recess is curved for mating with the stem of the utensil.

8. A cooking vessel according to any one of claims 2 to 7, wherein the lower peripheral portion extends along the elongated handle of the cooking vessel, for supporting a corresponding contact portion of the stem of the utensil.

9. A cooking vessel according to any one of claims 2 to 8, wherein the lower peripheral portion is curved for mating with the stem.

10. A cooking assembly comprising a cooking vessel according to any one of claims 2 to 9, the cooking assembly comprising said utensil, the stem of the utensil being shaped to cooperate with the predetermined shape of said opening of the elongated handle.

11. A cooking assembly according to claim 10, wherein the stem of the utensil has a lower portion, the lower portion comprising a recessed portion to mate with the lower peripheral portion of the opening of the elongated handle.

12. A cooking assembly according to claim 11, wherein the lower peripheral portion of the opening comprises a stopper edge and the recessed portion of the utensil comprises a locking edge that is shaped and positioned to match with said stopper edge in order to hook the stem against the lower peripheral portion of the opening of the handle.

13. An elongated handle for a cooking vessel comprising a bottom surface, to be used with a utensil having a cooking implement and a stem extending from the cooking implement, the elongated handle comprising :
- a base having a mounting component for mounting the handle on the cooking vessel to extend outwardly therefrom; and
- a free end provided with an opening for hooking the cooking vessel, the opening being sized and shaped for receiving the stem of the utensil, the opening having a predetermined shape for cooperating with the stem to temporarily hold the stem so that the cooking implement hangs above the bottom surface of the container when the elongated handle is mounted on the cooking vessel.

14. A cooking vessel to be used with a utensil having a cooking implement and a stem extending from the cooking implement, the stem having a recessed portion comprising a locking edge, the cooking vessel comprising
a container having a bottom surface; and
a handle extending from the container, the handle having a support surface for supporting the stem and an opening for receiving the stem of the utensil, the opening having a stopper edge that is shaped to match with said locking edge of the stem for hooking the stem against the opening to temporarily hold the utensil so that the cooking implement hangs above the bottom surface of the container.

15. A cooking vessel according to claim 14, wherein the opening is **characterized by** an upper peripheral portion and a lower peripheral portion located between the upper peripheral portion and the container, the stopper edge being provided on the lower peripheral portion, the upper and lower peripheral portions of the opening cooperating with the stem to temporarily hold said stem between said upper and lower peripheral portions.

16. A cooking vessel according to claim 15, wherein the handle is elongated and extends upwardly.

17. A cooking vessel according to claim 16, wherein the upper peripheral portion is positioned with respect to the lower peripheral portion so that, when said utensil is temporality held, the implement of said utensil is biased downwardly toward said bottom surface.

18. A cooking vessel according to claim 17, wherein the upper peripheral portion and the lower peripheral portion form an inclination angle with the plane of the bottom surface, wherein the inclination angle is between 15 and 60 degrees.

19. A cooking vessel according to any one of claims 15 to 17, wherein the upper peripheral portion comprises a recess capable of cooperating with the stem.

20. A cooking vessel according to claim 19, wherein the recess is curved for mating with the stem of the utensil.

21. A cooking vessel according to any one of claims 14 to 20, wherein the support surface of the handle is curved for mating with the stem.

22. A cooking assembly comprising a cooking vessel according to any one of claims 14 to 21, the cooking assembly further comprising said utensil.

23. A handle for a cooking vessel comprising a bottom surface, to be used with a utensil having a cooking implement and a stem extending from the cooking implement, the stem having a recessed portion comprising a locking edge, the handle comprising:
a base having a mounting component for mounting the handle on the cooking vessel;
- a support surface for supporting the stem; and
- an opening for receiving the stem of the utensil, the opening having a stopper edge that is shaped to match with said looking edge of the stem for hooking the stem against the opening to temporarily hold the utensil so that the cooking implement hangs above the bottom surface of the container when the handle is mounted on the cooking vessel.

24. A utensil to be used with a cooking vessel comprising a container having a bottom surface and a handle extending from the container, the handle having an opening which comprises a stopper edge, the utensil comprising:
- a cooking implement; and
- a stem extending from the cooking implement the stem being shaped and sized to fit into the opening of the handle of the cooking vessel, the stem having a recessed portion comprising a locking edge that is shaped and positioned to match said stopper edge of the opening for positioning the stem with respect to the handle to temporarily hold the utensil at the opening so that the cooking implement hangs above the bottom surface of the container.

25. A utensil according to claim 24, wherein the locking edge of the utensil has a curved profile.
